# EUROPÄISCHE PATENTSCHRIFT

(11) **EP 1 578 535 B1**
(45) Veröffentlichungstag und Bekanntmachung des Hinweises auf die Patenterteilung: **31.08.2011**
(21) Anmeldenummer: 03769196.1
(22) Anmeldetag: 16.09.2003
(51) Int. Cl.: B05B 1/24, F02M 53/06

(54) **BEHEIZTE DOSIEREINRICHTUNG FÜR DEN REFORMER EINER BRENNSTOFFZELLENANORDNUNG**
HEATED METERING DEVICE FOR THE REFORMER OF A FUEL CELL ARRANGEMENT
DISPOSITIF DE DOSAGE CHAUFFE POUR LE REFORMEUR D'UN DISPOSITIF DE PILES A COMBUSTIBLE

(30) Priorität: 03.12.2002 DE 10256453
(43) Veröffentlichungstag der Anmeldung: 28.09.2005
(73) Patentinhaber: ROBERT BOSCH GMBH, 70442 Stuttgart (DE)
(72) Erfinder: MILLER, Frank, 74360 Ilsfeld (DE)
(74) Vertreter: Körfer, Thomas
(86) Internationale Anmeldenummer: PCT/DE2003/003072
(87) Internationale Veröffentlichungsnummer: WO 2004/050257

(56) Entgegenhaltungen:
- WO-A-00/04288
- WO-A-02/00814
- DE-A- 19 542 318
- US-A- 4 108 953
- US-B1- 6 481 641

## Beschreibung

### Stand der Technik

Die Erfindung geht aus von einer Dosiereinrichtung nach der Gattung des Hauptanspruchs.

Bei brennstoffzellengestützten Transportsystemen kommen zur Gewinnung des benötigten Wasserstoffs aus kohlenwasserstoffhaltigen Kraftstoffen wie beispielsweise Benzin, Ethanol oder Methanol sog. chemische Reformer zum Einsatz. Zur Wärmeerzeugung, insbesondere in Kaltstartphasen, kommen katalytische Brenner und/oder Nachbrenneinrichtungen zum Einsatz.

Alle vom Reformer zum Reaktionsablauf benötigten Stoffe, wie z.B. Luft, Wasser und Kraftstoff, werden idealerweise dem Reaktionsbereich des Reformers in gasförmigem Zustand zugeführt. Da aber die Kraftstoffe, wie z.B. Methanol oder Benzin, und Wasser, an Bord des Transportsystems vorzugsweise in flüssiger Form vorliegen, müssen sie erst, kurz bevor sie zum Reaktionsbereich des Reformers gelangen, erhitzt werden, um sie zu verdampfen. Dies erfordert einen Vorverdampfer, der in der Lage ist, die entsprechenden Mengen an gasförmigem Kraftstoff und Wasserdampf zur Verfügung zu stellen, wobei meist die Abwärme des Reformers zur Verdampfung benutzt wird. Ähnliches gilt für die katalytischen Brenner und Nachbrenneinrichtung.

Da der Wasserstoff zumeist sofort verbraucht wird, müssen die chemischen Reformer in der Lage sein, die Produktion von Wasserstoff verzögerungsfrei, z.B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage, die entsprechenden Mengen an gasförmigen Reaktanden verzögerungsfrei zu erzeugen.

In Betriebszuständen in denen der Reformer bzw. die katalytischen Brenner und Nachbrenneinrichtung unterhalb der Betriebstemperatur arbeitet, ist es daher sinnvoll, dem Kraftstoff schon durch die Dosiereinrichtung Wärme zuzuführen. Dadurch wird der zugeführte Kraftstoff oder das zugeführte Kraftstoff-Gas-Gemisch reaktionsfreudiger, kann leichter und schneller verdampfen und sich vollständiger vermischen.

Beispielsweise sind aus der US 3,971,847 Vorrichtungen zur Eindosierung von Kraftstoffen in Reformer bekannt. Der Kraftstoff wird hier von vom Reformer relativ weit entfernten Zumeßeinrichtungen über lange Zuführungsleitungen und eine einfache Düse in einen temperierten Stoffstrom zugemessen. Dabei trifft der Kraftstoff zuerst auf Prallbleche, die nach der Austrittsöffnung der Düse angeordnet sind, welche eine Verwirbelung und Verteilung des Kraftstoffs bewirkten sollen, und gelangt dann über eine relativ lange Verdampfungsstrecke, welche für den Verdampfungsprozess notwendig ist, in den Reaktionsbereich des Reformers. Durch die lange Zuführungsleitung kann die Zumeßeinrichtung von thermischen Einflüssen des Reformers isoliert werden.

Aus der US 4,108,953 ist ein Gerät bekannt, mit dessen Hilfe Kraftstoff verdampft werden kann, bevor dieser in einen Brennraum einer Brennkraftmaschine eingespritzt wird. Hierzu wird das Kraftstoffluftgemisch über einen Vergaser, einem Diffusor zugefügt, dessen mit Öffnungen versehene Außenwand in ein Sieb eingebracht ist. Das Kraftstoffluftgemisch wird durch das Sieb gepresst, wobei sich ein Kraftstoffnebel bildet. Ein um das Sieb herum gewickeltes spiralförmiges Heizelement wird durch einen elektrischen Strom erhitzt, sodass der aus dem Sieb austreibende Kraftstoffnebel verdampft wird.

Nachteilig bei den aus der obengenannten Druckschrift bekannten Vorrichtungen ist insbesondere, daß unterhalb der Betriebstemperatur des Reformers, beispielsweise in einer Kaltstartphase, die Zerstäubung und Verdampfung des Kraftstoffes nur unzureichend erfolgt. Durch die dabei entstehende relative geringe Reaktionsfläche zwischen Kraftstoff und Oxidant erfolgt die Verbrennung bzw. chemische Reaktion nur langsam und zumeist auch unvollständig. Der Wirkungsgrad sinkt dadurch deutlich und die Schadstoffemissionen steigen unvorteilhaft an. Unvollständige Verbrennung bzw. eine unvollständige chemische Reaktion führt meist zur Bildung von aggressiven chemischen Verbindungen, welche den chemischen Reformer bzw. die Nachbrenneinrichtung schädigen können und zu Ablagerungen, die die Funktion beeinträchtigen können. Betriebszustände, bei welchen die Betriebstemperatur nicht erreicht wird, verlängern sich durch die unzureichende Zerstäubung und die damit einhergehende unzureichende Vermischung bzw. chemischen Reaktion von Kraftstoff und Oxidant.

### Vorteile der Erfindung

Die erfindungsgemäße Dosiereinrichtung mit den kennzeichnenden Merkmalen des Hauptanspruchs hat demgegenüber den Vorteil, daß durch die Vorwärmung mittels eines der Dosiereinrichtung zugeordneten Heizelements, die Zerstäubung und Verteilung des Kraftstoffes bzw. des Kraftstoff-Gas-Gemisches wesentlich verbessert wird. Dadurch kann beispielsweise die Kaltstartphase wesentlich verkürzt werden und schon während der Kaltstartphase der Wirkungsgrad des katalytischen Brenners oder der Nachbrenneinrichtung bzw. des chemischen Reformers deutlich gesteigert werden. Die Schadstoffemissionen sind dabei wesentlich reduziert. Aufwendige und damit teuere Vorrichtungen zur Gemischaufbereitung und Sprayaufbereitung können entfallen. Insbesondere kann bei gleicher oder besserer Zerstäubung auf eine energieintensive, aufwendig herzustellende und schlecht regelbare Luftunterstützung verzichtet werden, wodurch die Dosiereinrichtung weniger Energie benötigt, einfacher herzustellen ist und einfacher zu regeln ist. Außerdem kann beispielsweise auf einen Luftkompressor verzichtet werden.

Das Heizelement besteht aus einem maschenartigen Drahtgeflecht, vorzugsweise aus Metall oder einem Hohlkörper aus elektrisch aufheizbarem Material. Dadurch kann die erzeugte Stromwärme besonders gleichmäßig, gut verteilt und einfach, dem Kraftstoff bzw. dem jeweiligen Element der Dosiereinrichtung, welche wiederum Wärme an den Kraftstoff bzw. das Kraftstoff-Gas-Gemisch überträgt, zugeführt werden. Ein solches Heizelement läßt sich darüber hinaus besonders gut den jeweiligen geometrischen Anforderungen anpassen, ist kostengünstig in der Herstellung, widerstandsfest, benötigt wenig Energiezufuhr und weist nur einen geringen Raumbedarf auf. Insbesondere kann das Heizelement vor oder in handelsüblichen Dralldüsen, vor oder in jede beliebige Zerstäubungsmöglichkeit für Brennstoffzellentechnik wie beispielsweise Reformer, Nachbrenner, Startbrenner usw. oder in der Heiztechnik eingesetzt werden.

Durch die in den Unteransprüchen aufgeführten Maßnahmen sind vorteilhafte Weiterbildungen der im Hauptanspruch angegebenen Dosiereinrichtung möglich.

In einer ersten Weiterbildung der erfindungsgemäßen Dosiereinrichtung, sind die Zumeßleitung und die Zumeßeinrichtung durch einen Adapter hydraulisch dicht und lösbar gefügt. Dadurch erhöht sich die Montagefreundlichkeit.

In einer weiteren Weiterbildung weist der die Zumeßleitung und die Zumeßeinrichtung verbindende Adapter eine Luftzuführung auf, wobei die Luftzuführung im Adapter mit der Zumeßleitung verbunden ist. Dadurch läßt sich bereits in der Zuführungsleitung die Gemischaufbereitung einleiten, wobei der in die Zuführungsleitung eingemessene Kraftstoff mit Luft gemischt wird. Die Zerstäubung und Gemischbildung von Kraftstoff und mit Luft wird dadurch insgesamt verbessert.

Vorteilhafterweise wird das Heizelement elektrisch beheizt bzw. betrieben. Dadurch ist es unter Anderem möglich, das Heizelement besonders leicht unterschiedlichsten geometrischen Formen anzupassen, wobei auch die Ansteuerung bzw. Energieversorgung besonders einfach und daher kostengünstig erfolgen kann.

Vorteilhaft ist weiterhin, wenn daß Heizelement zumindest einem Teil der Zumeßleitung, des Adapters, des Düsenkörpers und/oder der Zumeßeinrichtung Wärme zuführen kann. Dadurch kann dem Kraftstoff kurz vor der Gemischbildung mit Luft, oder einem anderen Gas, bzw. kurz vor der Eindosierung in den Zumeßraum Wärme zugeführt werden. Durch die relativ kurzen Entfernungen zur Abspritzöffnung geht so nur wenig Wärme verloren, welche von dem Heizelement erzeugt wird. Die Dosierung der dem Kraftstoff bzw. dem Kraftstoff-Gas-Gemisch zugeführten Wärme, kann dadurch sehr genau, gut steuerbar und mit einem Mindestmaß an Energieaufwand erfolgen. Außerdem kann durch die unterschiedlichen Stellen der Wärmezuführung flexibel auf konstruktive Vorgaben eingegangen werden.

Durch die Fixierung des Heizelementes mittels eines Befestigungselementes aus Kunststoff, Tauchharz oder Keramik kann auf die jeweils thermischen und mechanischen Anforderungen vorteilhaft einfach eingegangen werden.

Vorteilhaft ist zudem, wenn das Heizelement oder das Befestigungselement mit einer Isolierschicht, insbesondere aus einem Kunststoff oder aus Keramik, zumindest teilweise umgeben ist. Dadurch läßt sich der Energiebedarf des Heizelementes weiter senken und die Steuerbarkeit der Wärmezuführung durch das Heizelements weiter verbessern. Insbesondere wird die Zeitkonstante des Aufwärmvorgangs verkürzt.

Weiterhin vorteilhaft ist, wenn ein Regler das Heizelement in seiner Heizleistung, insbesondere auf Grund der in dem Zumeßraum herrschenden Temperatur, reguliert. Die Regulierung kann auch auf Grund anderer Parameter des Reformers oder der Nachbrenneinrichtung erfolgen. Zudem kann die Regulierung auch eine einfache zeitliche Steuerung der Heizleistung sein. Durch diese erfindungsgemäße Weiterbildung wird eine Überhitzung des Kraftstoffes bzw. des Kraftstoff-Gas-Gemisches und der Dosiereinrichtung vermieden und der Energiebedarf des Heizelements auf ein Mindestmaß beschränkt.

Vorteilhafterweise wird als Zumeßeinrichtung ein Brennstoffeinspritzventil eingesetzt, wie es z.B. für Hubkolbenmaschinen mit innerer Verbrennung benutzt wird. Der Einsatz solcher Ventile hat mehrere Vorteile. So lassen sie eine besonders genaue Steuerung bzw. Regelung der Kraftstoffzumessung zu, wobei die Zumessung über mehrere Parameter, wie z.B. Tastverhältnis, Taktfrequenz und ggf. Hublänge, gesteuert werden kann. Dabei ist die Abhängigkeit vom Pumpendruck weit weniger ausgeprägt, als bei Zumeßeinrichtungen, die über den Leitungsquerschnitt den Volumenstrom des Kraftstoffs steuern und der Dosierbereich ist deutlich größer.

Darüber hinaus sind die Brennstoffeinspritzventile vielfach bewährte, in ihrem Verhalten bekannte, kostengünstige, gegenüber den verwendeten Kraftstoffen chemisch stabile und zuverlässige Bauteile, wobei dies im besonderen für sog. Niederdruck-Brennstoffeinspritzventile zutrifft, die aufgrund der thermischen Entkopplung durch die Zumeßleitung hier gut einsetzbar sind.

Die Zuführungsleitung weist vorteilhafterweise eine Anzahl wandstärkereduzierter Stellen auf, die die Wärmeleitfähigkeit der Zuführungsleitung herabsetzten bzw. auch als Kühlkörper dienen können.

Vorteilhaft ist zudem, das Heizelement nach der Abspritzöffnung anzuordnen. Dadurch können beispielsweise die Brennstoff-/Gasgemische mehrerer Dosiereinrichtungen in einfache Weise aufgeheizt und damit zerstäubt werden.

Besonders einfach und dem jeweiligen Anforderungen leicht anpaßbar kann die Dosiereinrichtung konstruiert werden, wenn das Heizelement im Düsenkörper (7) und/oder in der Zumeßleitung und/oder im Adapter (6) und/oder im oder auf der Zumeßeinrichtung (2) angeordnet wird.

Durch den mehrteiligen Aufbau der Dosiereinrichtung ist eine kostengünstige Herstellung und der Einsatz von standardisierten Bauteilen möglich.

### Zeichnung

Ausführungsbeispiele der Erfindung sind in der Zeichnung vereinfacht dargestellt und in der nachfolgenden Beschreibung näher erläutert. Es zeigen:
- Fig. 1: eine schematische Darstellung eines ersten Ausführungsbeispiels einer erfindungsgemäßen Dosiereinrichtung,
- Fig. 2: eine schematische Darstellung eines zweiten Ausführungsbeispiels einer erfindungsgemäßen Dosiereinrichtung,
- Fig. 3: eine schematische Darstellung eines dritten Ausführungsbeispiels einer erfindungsgemäßen Dosiereinrichtung im Bereich des Düsenkörpers,
- Fig. 4: eine schematische Darstellung eines vierten Ausführungsbeispiels einer erfindungsgemäßen Dosiereinrichtung im Bereich des Düsenkörpers und
- Fig. 5: eine schematische Darstellung eines fünften Ausführungsbeispiels einer erfindungsgemäßen Dosiereinrichtung.

### Beschreibung der Ausführungsbeispiele

Nachfolgend wird ein Ausführungsbeispiel der Erfindung beispielhaft beschrieben.

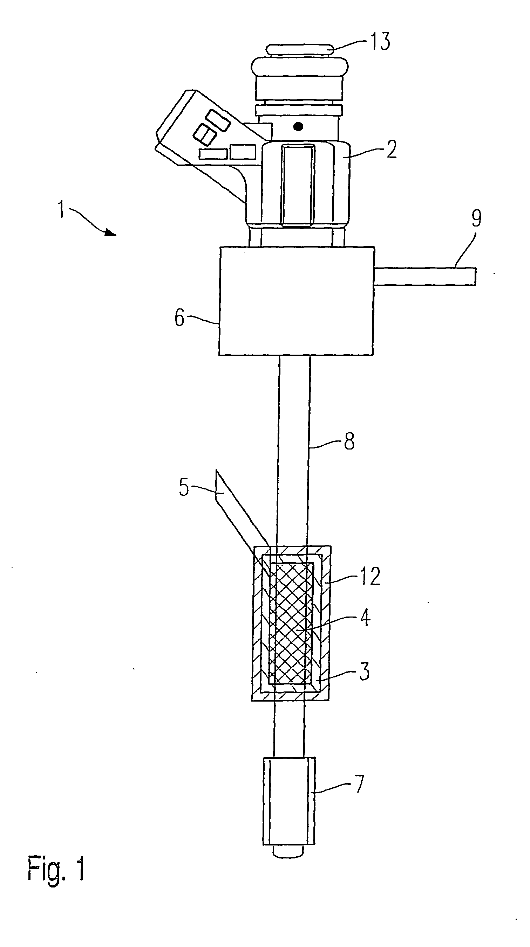

Ein in Fig. 1 dargestelltes Ausführungsbeispiel einer erfindungsgemäßen Dosiereinrichtung 1 ist in der Form einer Dosiereinrichtung 1 für die Verwendung von Niederdruck-Brennstoffeinspritzventilen ausgeführt. Die Dosiereinrichtung 1 eignet sich insbesondere zum Eintrag und zur Zerstäubung von Kraftstoff bzw. eines Kraftstoff-Gas-Gemisches in einen nicht dargestellten Zumeßraum eines nicht weiter dargestellten chemischen Reformers zur Gewinnung von Wasserstoff oder einer nicht weiter dargestellten Nachbrenneinrichtung oder katalytischen Brenners zur Erzeugung von Wärme, wobei der Zumeßraum als Hohlzylinder mit einer beschichteten Innenfläche ausgestaltet sein kann.

Die Dosiereinrichtung 1 besteht aus einer Zumeßeinrichtung 2, welche in diesem Ausführungsbeispiel als Niederdruck-Brennstoffeinspritzventil ausgeführt ist, einem elektrischen Anschluß 5, einem Adapter 6 zur Aufnahme der Zumeßeinrichtung 2 und einer rohrförmigen, beispielsweise 10 bis 100 cm langen Zumeßleitung 8, einer Luftzuführung 9 und einem Düsenkörper 7. Die Zumeßeinrichtung 2 ist rohrförmig. An der Unterseite der Zumeßeinrichtung 2 erfolgt die Zumessung von Kraftstoff in die Zumeßleitung 8, wobei der Adapter 6 die Zumeßeinrichtung 2 und die Zumeßleitung 8 nach außen hydraulisch dicht miteinander verbindet. Die rohrförmige Luftzuführung 9 mündet in den Adapter 6 und steht so mit der Zuführungsleitung 8 in Verbindung.

Das der Zumeßleitung 8 zugewandte hohlzylindrisch geformte Ende des Düsenkörpers 7 umfaßt das entsprechende Ende der Zumeßleitung 8 und ist dort über eine Fügeverbindung, die eine Schweiß- oder Schraubverbindung, insbesondere eine durch Laserschweißen hergestellte Fügeverbindung, sein kann hydraulisch dicht mit der Zumeßleitung 8 verbunden. Die Zumeßleitung 8 selbst besteht beispielsweise aus einem standardisierten, aus Edelstahl bestehenden, Metallrohr.

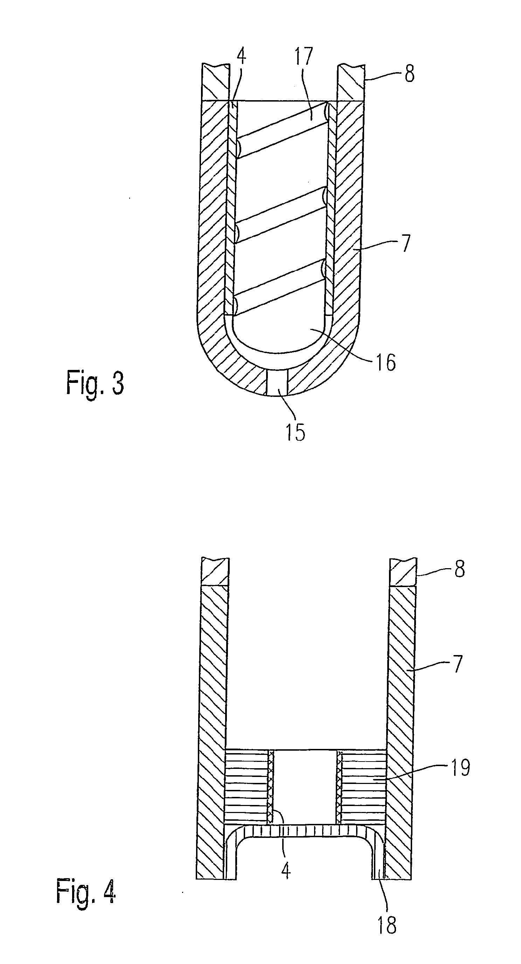

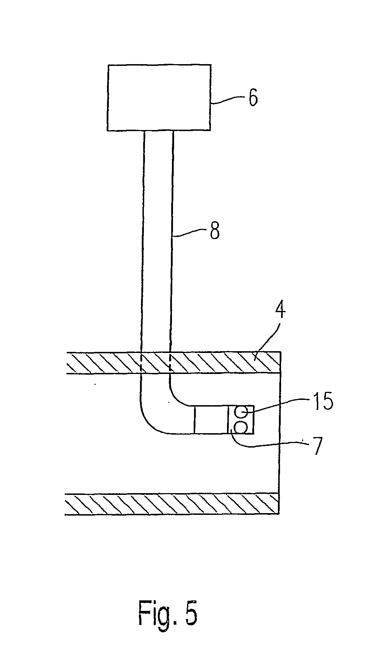

Der Düsenkörper 7 weist in seinem kugelsegmentförmig bzw. halbkugelförmig geformten abspritzseitigen sphärischen Teil zumindest eine in Fig. 3 und 5 dargestellte Abspritzöffnungen 15 auf.

Über einen Teil seines axialen Verlaufs weist die Zumeßleitung 8 ein vorzugsweise aus Metall bestehendes gitterartiges Heizelement 4 in Form eines Drahtgeflechts auf. Das Heizelement 4 umschließt die Zumeßleitung 8 umfänglich des Außendurchmessers der Zumeßleitung 8, wobei das Heizelement 4 dicht an der Zumeßleitung 8 anliegt und mittels eines aus hitzebeständigem Tauchharz bestehenden Befestigungselements 3 in Form einer Tauchharzschicht auf der Zumeßleitung 8 fixiert und nach außen hin wärmeisoliert ist. Um das Befestigungselement 3 ist eine zusätzliche Isolierschicht 12 angeordnet, welche das Heizelement 4 zusätzlich wärmeisoliert. Die Isolierschicht 12 besteht beispielsweise aus einem hitzebeständigen Kunststoff oder einem keramischen Material. Die Isolierfunktion kann auch vollständig von dem Befestigungselement 3 übernommen sein.

Ein elektrischer Anschluß 5 ist an der dem Adapter 6 zugewandten, weniger thermisch belasteten Seite des Heizelements 4 angeschlossen und greift durch das Befestigungselement 3 und die Isolierschicht 12 hindurch. Der elektrische Anschluß 5 ist vorzugsweise in einem Bereich der Zumeßleitung 8 angeordnet, der im Betrieb eine Temperatur von nicht mehr als 80 °C erreicht. Bei Einsatz der erfindungsgemäßen Dosiereinrichtung 1 in einem nicht dargestellten chemischen Reformer für Brennstoffzellenfahrzeuge liegt dieser Bereich in der sog. Peripheriebox, welche nicht dargestellt ist.

Ein nicht dargestellter Regler reguliert den durch das Heizelement 4 fließenden Strom und damit die Wärmeleistung des Heizelements 4. Die Wärmeleistung wird beispielsweise in Abhängigkeit der Temperatur im nicht dargestellten Zumeßraum reguliert oder über eine in dem Regler abgelegte Kennlinie die weiteren Betriebsparameter, wie z.B. die abgelaufene Zeit seit dem Start der Dosiereinrichtung 1 oder beispielsweise der zugehörigen nicht dargestellten Nachbrenneinrichtung, erfasst.

Der Zumeßeinrichtung 2 wird über einen an der Oberseite der Zumeßeinrichtung 2 liegenden Kraftstoffanschluß 13 Kraftstoff, beispielsweise Benzin, Ethanol oder Methanol, von einer nicht dargestellten Kraftstoffpumpe und Kraftstoffleitung druckbehaftet zugeführt. Der Kraftstoff strömt bei Betrieb der Dosiereinrichtung 1 nach unten und wird durch den im unteren Ende der Zumeßeinrichtung 2 liegenden, nicht dargestellten Dichtsitz in bekannter Weise durch Öffnen und Schließen des Dichtsitzes in die Zuführungsleitung 8 eingemessen.

Durch die seitlich nahe der Zumeßeinrichtung 2 über den Adapter 6 in die Zuführungsleitung 8 mündende Luftzuführung 9 können zur Gemischaufbereitung Luft oder andere Gase, beispielsweise brennbare Restgase aus einem Reformierungs- oder Brennstoffzellenprozeß, zugeführt werden. Im weiteren Verlauf strömt der Kraftstoff bzw. das Kraftstoff-Gas-Gemisch durch die Zuführungsleitung 8 zum Düsenkörper 7 und wird dort durch die in Fig. 3 und 5 dargestellten Abspritzöffnungen 15 in den nicht dargestellten Zumeßraum eindosiert.

In der Zuführungsleitung 8 wird der Kraftstoff bzw. das Kraftstoff-Gas-Gemisch insbesondere zu Beginn einer Kaltstartphase durch das Heizelement 4 erwärmt. Dadurch verbessert sich die Zerstäubung des Kraftstoffes deutlich. Der Kraftstoff wird dabei insbesondere solange erwärmt, bis der Kraftstoff vollständig verdampft ist. Der Kraftstoff bzw. das Kraftstoff-Gas-Gemisch befindet sich so schon beispielsweise in einer Kaltstartphase bei Eintritt in den nicht dargestellten Zumeßraum vollständig in der Dampfphase. Insbesondere bei einem Kraftfahrzeug kann das Heizelement 4 beispielsweise schon bei Öffnen, Besteigen oder Starten des Kraftfahrzeugs mit elektrischer Leistung versorgt werden. Die Kaltstartphase wird dadurch weiterhin verkürzt.

Das Heizelement wird solange betrieben, bis die Betriebstemperatur der nicht dargestellten Nachbrenneinrichtung, des chemischen Reformers oder des katalytischen Brenners erreicht ist.

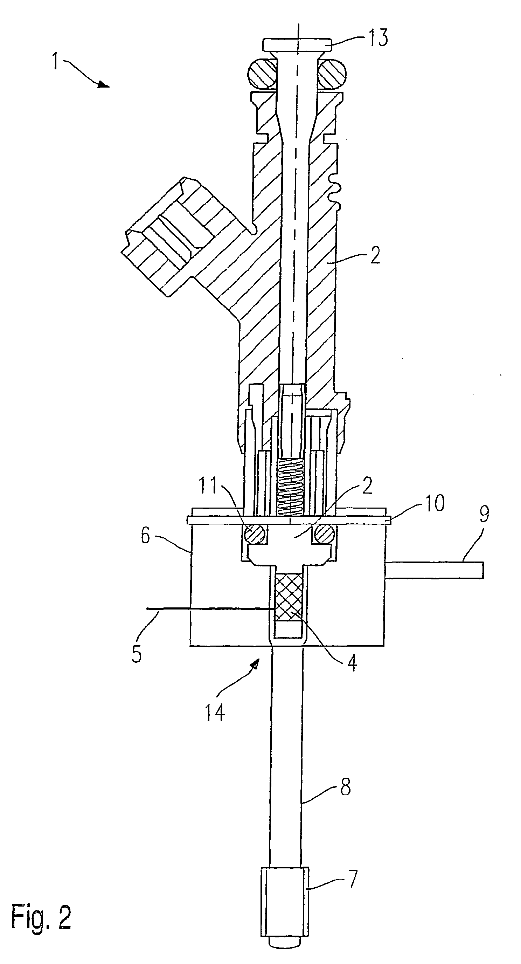

Fig. 2 zeigt ein zweites Ausführungsbeispiel der erfindungsgemäßen Dosiereinrichtung 1 ähnlich dem ersten Ausführungsbeispiel.

Die Zumeßeinrichtung 2 greift beim Ausführungsbeispiel der Fig. 2 mit seiner Unterseite, in dem ein nicht dargestellter Dichtsitz der Zumeßeinrichtung 2 angeordnet ist, in eine durchgängige Öffnung 14 des Adapters 6. Die als Brennstoffeinspritzventil ausgebildete Zumeßeinrichtung 2 wird durch ein Fixierelement 10 mit dem Adapter 6 lösbar verbunden, wobei ein Dichtring 11, welcher um die rohrförmige Unterseite der Zumeßeinrichtung 2 verläuft, die Öffnung 14 zwischen Zumeßeinrichtung 2 und Adapter 6 hydraulisch dicht abdichtet. Die Zumeßleitung 8 ist einerseits mit der der Zumeßeinrichtung 2 abgewandten Seite der Öffnung 14 hydraulisch dicht verbunden und anderseits mit dem Düsenkörper 7 abgeschlossen. Die Luftzuführung 9 mündet in den Adapter 6 und ist mit der Zumeßleitung 8 über den Adapter 6 verbunden.

Das Heizelement 4 sitzt auf der Unterseite der Zumeßeinrichtung 2, welche innerhalb des Adapters 6 verläuft. Der elektrische Anschluß 5 greift durch den Adapter 6 hindurch und kontaktiert das als Drahtmaschennetz ausgebildete Heizelement 4.

Fig. 3 zeigt eine schematische Darstellung eines dritten Ausführungsbeispiels einer erfindungsgemäßen Dosiereinrichtung 1 im Bereich des Düsenkörpers 7. Der Düsenkörper 7 ist in diesem Ausführungsbeispiel hohlzylinderförmig ausgebildet, wobei ein Ende offen ist und mit der Zumeßleitung 8 hermetisch dicht abgeschlossen ist. Das andere Ende ist sphärisch abgeschlossen und weist eine zentrisch angeordnete Abspritzöffnung 15 auf.

Innerhalb des Düsenkörpers 7 ist ein Dralleinsatz 16 angeordneten, der, mit kleinerem Durchmesser, den Innenkonturen des Düsenkörpers 7 angepaßt ist. Ein Drallkanal 7 verläuft wendelförmig in der Oberfläche des Düsenkörpers 7. Zwischen dem Innenumfang des Düsenkörpers 7 und dem Dralleinsatz 16 ist das rohrförmige, aus einem Drahtmaschennetz bestehende Heizelement 4 als Einsatz angeordnet.

Fig. 4 zeigt eine schematische Darstellung eines vierten Ausführungsbeispiels einer erfindungsgemäßen Dosiereinrichtung 1 im Bereich des Düsenkörpers 7, wobei im Unterschied zum dritten Ausführungsbeispiel aus Fig. 3 der Düsenkörpers 7 an seinem der Zumeßleitung 8 abgewandten Ende nicht sphärisch abgeschlossen ist, sondern mit einer Spritzlochscheibe 18, die mehrere, nicht näher dargestellte Abspritzöffnungen 15 aufweist. Auf der der Zumeßleitung 8 zugewandten Seite der Spritzlochscheibe 18 ist ein Ringkörper 19 angeordneten, welche die lichte Weite des Düsenkörpers 7 zur Spritzlochscheibe 18 verkleinert. Unmittelbar am Innenumfang des Ringkörpers 19 ist das Heizelement 4 als Einsatz angeordnet, wobei hier das Heizelement 4 ebenfalls aus einem Drahtmaschennetz besteht und rohrförmigen ausgebildet ist.

Fig. 5 zeigt eine schematische Darstellung eines fünften Ausführungsbeispiels einer erfindungsgemäßen Dosiereinrichtung 1. Das Heizelement 4 ist dabei nach den Abspritzöffnungen 15 angeordnet, indem die Zumeßleitung 8 seitlich das in diesem Ausführungsbeispiel rohrförmige Heizelement 4 durchgreift. Die Abspritzöffnungen 15 münden unter Zwischenschaltung des Heizelements 4 in den nicht dargestellten Zumeßraum.

## Patentansprüche

1. Dosiereinrichtung (1) für flüssige Kraftstoffe, insbesondere zum Eintrag in einen chemischen Reformer zur Gewinnung von Wasserstoff oder in eine Nachbrenneinrichtung zur Erzeugung von Wärme, mit zumindest einer Zumesseinrichtung (2) zum Zumessen von Kraftstoff in eine Zumessleitung (8) und mit einem sich an die Zumessleitung (8) anschließenden Düsenkörper (7), der zumindest eine Abspritzöffnung aufweist, die in einen Zumessraum ausmündet,
**dadurch gekennzeichnet,**
**dass** die Dosiereinrichtung (1) zumindest ein Heizelement (4) aus einem maschenartig vernetzten Drahtgeflecht und/oder einen rohrförmigen Hohlkörper aufweist, mit welchem dem Kraftstoff Wärme zugeführt werden kann und dass die Zumessleitung (8) und die Zumesseinrichtung (2) durch einen Adapter (6) hydraulisch dicht und lösbar gefügt sind.

2. Dosiereinrichtung nach Anspruch 1,
**dadurch gekennzeichnet,**
**dass** der Adapter (6) eine Luftzuführung (9) aufweist die im Adapter (6) mit der Zumessleitung (8) in Verbindung steht.

3. Dosiereinrichtung nach einem der Ansprüche 1 bis 2,
**dadurch gekennzeichnet,**
**dass** das Heizelement (4) elektrisch betrieben bzw. beheizt wird.

4. Dosiereinrichtung nach einem der Ansprüche 1 bis 3,
**dadurch gekennzeichnet,**
**dass** das Heizelement (4) zumindest einem Teil der Zumessleitung (8) und/oder des Adapters (6) und/oder der Zumesseinrichtung (2) und/oder dem Düsenkörper (7) Wärme zuführen kann.

5. Dosiereinrichtung nach einem der Ansprüche 1 bis 4,
**dadurch gekennzeichnet,**
**dass** das Heizelement (4) mittels eines Befestigungselements (3) insbesondere aus Kunststoff, Tauchharz oder Keramik fixiert ist.

6. Dosiereinrichtung nach einem der Ansprüche 1 bis 5,
**dadurch gekennzeichnet,**
**dass** das Heizelement (4) und/oder das Befestigungselement (3) mit einer Isolierschicht (12), insbesondere aus einem temperaturbeständigem Kunststoff oder aus Keramik, zumindest teilweise umgeben ist.

7. Dosiereinrichtung nach einem der Ansprüche 1 bis 6,
**dadurch gekennzeichnet,**
**dass** das Heizelement (4) durch einen Regler in seiner Heizleistung, insbesondere auf Grund der Temperatur im Zumessraum, geregelt wird, oder aufgrund anderer Betriebsparameter gesteuert oder geregelt wird.

8. Dosiereinrichtung nach einem der Ansprüche 1 bis 7,
**dadurch gekennzeichnet,**
**dass** die Zumesseinrichtung (2) ein Brennstoffeinspritzventil ist.

9. Dosiereinrichtung nach Anspruch 8,
**dadurch gekennzeichnet,**
**dass** das Brennstoffeinspritzventil ein Niederdruck-Brennstoffeinspritzventil ist, welches mit Brenn- bzw. Kraftstoffdrücken von bis zu 10 bar arbeitet.

10. Dosiereinrichtung nach einem der Ansprüche 1 bis 9,
**dadurch gekennzeichnet,**
**dass** die Zumessleitung (8) in ihrem axialen Verlauf zumindest eine wandstärkereduzierte Stelle oder einen wandstärkereduzierten Bereich aufweist.

11. Dosiereinrichtung nach einem der Ansprüche 1 bis 10,
**dadurch gekennzeichnet,**
**dass** das Heizelement (4) nach der Abspritzöffnung (15) angeordnet ist.

12. Dosiereinrichtung nach einem der Ansprüche 1 bis 10,
**dadurch gekennzeichnet,**
**dass** das Heizelement (4) im Düsenkörper (7) und/oder in der Zumessleitung und/oder im Adapter (6) und/oder in oder auf der Zumesseinrichtung (2) angeordnet ist.

## Claims

1. Metering device (1) for liquid fuels, in particular for introducing said liquid fuels into a chemical reformer in order to obtain hydrogen or into an afterburner device in order to generate heat, having at least one dosing device (2) for dosing fuel into a dosing line (8) and having a nozzle body (7) which adjoins the dosing line (8) and has at least one ejection opening which opens out into a dosing space, **characterized in that** the metering device (1) has at least one heating element (4) made from a wire mesh interlinked in the manner of a mesh, and/or a tubular hollow body, with which heat can be supplied to the fuel, and **in that** the dosing line (8) and the dosing device (2) are joined in a hydraulically sealed and detachable manner by means of an adapter (6).

2. Metering device according to Claim 1, **characterized in that** the adapter (6) has an air inlet (9) which is connected in the adapter (6) to the dosing line (8).

3. Metering device according to either of Claims 1 and 2, **characterized in that** the heating element (4) is operated and heated electrically.

4. Metering device according to one of Claims 1 to 3, **characterized in that** the heating element (4) can supply heat to at least part of the dosing line (8) and/or of the adapter (6), and/or to the dosing device (2) and/or to the nozzle body (7).

5. Metering device according to one of Claims 1 to 4, **characterized in that** the heating element (4) is fixed by means of a fastening element (3), in particular made of plastic, hot-dipped resin or ceramic.

6. Metering device according to one of Claims 1 to 5, **characterized in that** the heating element (4) and/or the fastening element (3) is at least partially surrounded by an insulating layer (12), in particular made of a temperature-resistant plastic or of ceramic.

7. Metering device according to one of Claims 1 to 6, **characterized in that** the heating power of the heating element (4) is regulated by a regulator, in particular on the basis of the temperature in the dosing space, or is controlled or regulated on the basis of other operating parameters.

8. Metering device according to one of Claims 1 to 7, **characterized in that** the dosing device (2) is a fuel injection valve.

9. Metering device according to Claim 8, **characterized in that** the fuel injection valve is a low-pressure fuel injection valve which operates at combustion or fuel pressures of up to 10 bar.

10. Metering device according to one of Claims 1 to 9, **characterized in that** the dosing line (8) has at least one point of reduced wall thickness or one region of reduced wall thickness in its axial profile.

11. Metering device according to one of Claims 1 to 10, **characterized in that** the heating element (4) is arranged downstream of the ejection opening (15).

12. Metering device according to one of Claims 1 to 10, **characterized in that** the heating element (4) is arranged in the nozzle body (7) and/or in the dosing line and/or in the adapter (6) and/or in or on the dosing device (2).

## Revendications

1. Dispositif de proportionnement (1) pour carburants liquides, en particulier pour l'introduction dans un reformeur chimique pour obtenir de l'hydrogène ou dans un dispositif de post-combustion pour produire de la chaleur, comprenant au moins un dispositif de dosage (2) pour doser du carburant dans une conduite de dosage (8) et comprenant un corps de buse (7) se raccordant à la conduite de dosage (8), qui présente au moins une ouverture de pulvérisation, qui débouche dans un espace de dosage,
**caractérisé en ce que**
le dispositif de proportionnement (1) présente au moins un élément chauffant (4) constitué d'un treillis en fil métallique en forme de filet à mailles et/ou un corps creux de forme tubulaire, avec lequel de la chaleur peut être communiquée au carburant, et
**en ce que** la conduite de dosage (8) et le dispositif de dosage (2) sont assemblés de manière étanche hydrauliquement et de manière amovible par un adaptateur (6).

2. Dispositif de proportionnement selon la revendication 1,
**caractérisé en ce que**
l'adaptateur (6) présente une amenée d'air (9) qui est en liaison avec la conduite de dosage (8) dans l'adaptateur (6).

3. Dispositif de proportionnement selon l'une quelconque des revendications 1 à 2,
**caractérisé en ce que**
l'élément chauffant (4) est actionné ou chauffé électriquement.

4. Dispositif de proportionnement selon l'une quelconque des revendications 1 à 3,
**caractérisé en ce que**
l'élément chauffant (4) peut communiquer de la chaleur à au moins une partie de la conduite de dosage (8) et/ou de l'adaptateur (6) et/ou du dispositif de dosage (2) et/ou du corps de buse (7).

5. Dispositif de proportionnement selon l'une quelconque des revendications 1 à 4,
**caractérisé en ce que**
l'élément chauffant (4) est fixé au moyen d'un élément de fixation (3) notamment en plastique, en résine d'immersion ou en céramique.

6. Dispositif de proportionnement selon l'une quelconque des revendications 1 à 5,
**caractérisé en ce que**
l'élément chauffant (4) et/ou l'élément de fixation (3) sont entourés au moins en partie par une couche isolante (12), notamment en un plastique résistant à la température ou en céramique.

7. Dispositif de proportionnement selon l'une quelconque des revendications 1 à 6,
**caractérisé en ce que**
l'élément chauffant (4) est commandé ou régulé par un régulateur en termes de puissance de chauffe, notamment sur la base de la température dans l'espace de dosage, ou sur la base d'autres paramètres de fonctionnement.

8. Dispositif de proportionnement selon l'une quelconque des revendications 1 à 7,
**caractérisé en ce que**
le dispositif de dosage (2) est une soupape d'injection de carburant.

9. Dispositif de proportionnement selon la revendication 8,
**caractérisé en ce que**
la soupape d'injection de carburant est une soupape d'injection de carburant à basse pression, qui fonctionne à des pressions de combustible ou de carburant allant jusqu'à 10 bar.

10. Dispositif de proportionnement selon l'une quelconque des revendications 1 à 9,
**caractérisé en ce que**
la conduite de dosage (8) présente, dans son étendue axiale, au moins un point d'épaisseur de paroi réduite ou une région d'épaisseur de paroi réduite.

11. Dispositif de proportionnement selon l'une quelconque des revendications 1 à 10,
**caractérisé en ce que**
l'élément chauffant (4) est disposé après l'ouverture de pulvérisation (15).

12. Dispositif de proportionnement selon l'une quelconque des revendications 1 à 10,
**caractérisé en ce que**
l'élément chauffant (4) est disposé dans le corps de buse (7) et/ou dans la conduite de dosage et/ou dans l'adaptateur (6) et/ou dans ou sur le dispositif de dosage (2).
